# EUROPÄISCHE PATENTANMELDUNG

(11) **EP 4 570 735 A1**
(43) Veröffentlichungstag der Anmeldung: **18.06.2025**
(21) Anmeldenummer: 24219064.3
(22) Anmeldetag: 11.12.2024
(51) Int. Cl.: B66F 3/12, B25B 27/14, B66F 3/36

(54) **HEBEVORRICHTUNG**

(30) Priorität: 14.12.2023 DE 102023135239
(71) Anmelder: Innio Jenbacher GmbH & Co OG, 6200 Jenbach (AT)
(72) Erfinder: GRASL, Lukas, 6252 Breitenbach am Inn (AT); DENGG, Johannes, 6278 Hainzenberg (AT)
(74) Vertreter: Torggler & Hofmann Patentanwälte - Innsbruck

(57) **Zusammenfassung**

Hebevorrichtung (1) für insbesondere scheibenförmige Körper (2), insbesondere Schwingungsdämpfer, mit einem Basiselement (3) und einem Aufnahmeelement (4), wobei das Aufnahmeelement (4) ein rahmenförmiges Halteelement (5) zur temporären Lagerung des insbesondere scheibenförmigen Körpers (2) umfasst und das Aufnahmeelement (4) mit dem Basiselement (3) über ein Drehlager (6) und eine zwischen dem Basiselement (3) und dem Aufnahmeelement (4) wirkbar angeordnete Antriebsvorrichtung (7), insbesondere Linearantrieb, verbunden ist, wobei das Halteelement (5) wenigstens ein drehbeweglich gelagertes Auflageelement (8,8') für den insbesondere scheibenförmigen Körper (2) aufweist.

## Beschreibung

Die Erfindung betrifft eine Hebevorrichtung für insbesondere scheibenförmige Körper, insbesondere Schwingungsdämpfer, mit einem Basiselement und einem Aufnahmeelement, wobei das Aufnahmeelement ein rahmenförmiges Halteelement zur temporären Lagerung des scheibenförmigen Körpers umfasst, und das Aufnahmeelement mit dem Basiselement über ein Drehlager und eine zwischen dem Basiselement und dem Aufnahmeelement wirkbar angeordnete Antriebsvorrichtung, insbesondere Linearantrieb, verbunden ist.

Eine gattungsgemäße Hebevorrichtung stellt beispielsweise der Rasentraktorheber von MASKO dar. Zum Anheben des Rasentraktors wird die Hebevorrichtung unter dem Traktor positioniert und in weiterer Folge der Tragrahmen mittels eines Spindelantriebes um das gemeinsame Drehlager gegenüber dem Basisrahmen gekippt, sodass die Unterseite des Traktors für Reinigungs- und Wartungsarbeiten zugänglich ist.

Die bekannten Hebevorrichtungen sind aufgrund ihrer Ausgestaltung in ihren Anwendungsbereichen stark eingeschränkt, weshalb es sich die Erfindung zur Aufgabe gemacht hat, eine gegenüber dem Stand der Technik verbesserte Hebevorrichtung anzugeben, die sowohl hinsichtlich der zu hebenden Körper als auch hinsichtlich des Einsatzortes flexibler gehandhabt werden kann.

Dies wird bei der erfindungsgemäßen Hebevorrichtung dadurch erreicht, dass das Halteelement wenigstens ein drehbeweglich gelagertes Auflageelement für den insbesondere scheibenförmigen Körper aufweist.

Dadurch ist es möglich, den Körper auch dann zu bewegen, insbesondere zu drehen, wenn sich die Hebevorrichtung in einer Hebeposition befindet, wodurch erreicht wird, dass die Lageposition des hochgehobenen Körpers für Wartungs- und/oder Montagearbeiten entsprechend angepasst werden kann.

Dabei hat es sich weiters als besonders vorteilhaft herausgestellt, wenn - in einem Längsschnitt betrachtet - die Lagerebene des Halteelementes von der Lagerachse des Drehlagers vertikal beabstandet ist.

Anders ausgedrückt, ist die Lagerebene des Halteelementes von der Ebene des Basiselementes beabstandet, sodass zum einen der Kippwinkel kleiner gehalten werden kann und zum anderen die Zugänglichkeit zur gesamten Unterseite des Halteelementes und damit zum hochgehobenen Körper - im Gegensatz zu den Hebevorrichtungen des Standes der Technik - in ausreichendem Maße gegeben ist.

Ein bevorzugtes Ausführungsbeispiel der Erfindung sieht vor, dass das Halteelement eine Durchtrittsöffnung zur Aufnahme des scheibenförmigen Körpers aufweist, wobei in zwei gegenüberliegenden Endabschnitten der Durchtrittsöffnung jeweils wenigstens ein drehbar gelagertes Auflageelement derart angeordnet ist, dass die Durchtrittsöffnung von den gegenüberliegenden Auflageelementen begrenzt ist.

In anderen Worten weist das im Wesentlichen flächige Halteelement, das beispielsweise als viereckiger Rahmen ausgebildet sein kann, eine Öffnung auf, in die der zu hebende Körper zumindest teilweise hineinragt, sodass der zu hebende Körper nicht nur auf den Auflageelementen des Halteelementes aufliegt, sondern zusätzlich vom Halteelement zumindest bereichsweise umfasst wird, wodurch ein sicherer Halt des Körpers, insbesondere gegen ein seitliches Umkippen, bei gleichzeitiger Drehbeweglichkeit des Körpers erreicht wird.

Versuche der Anmelderin haben ergeben, dass das Verhältnis zwischen sicherem Halt bei gleichzeitiger Drehbeweglichkeit des zu hebenden Körpers besonders gut dann erreicht wird, wenn die Längserstreckung der zwischen den gegenüberliegenden Auflageelementen verbleibenden lichten Öffnung der Durchtrittsöffnung zwischen 65 und 98 Prozent, vorzugsweise zwischen 85 und 96 Prozent, des Durchmessers eines scheibenförmigen Körpers beträgt.

Gemäß einem weiteren Ausführungsbeispiel der Erfindung ist vorgesehen, dass wenigstens zwei gegenüberliegende Auflageelemente von Laufkörpern mit im Wesentlichen parallelen Achsen gebildet sind, wodurch eine technisch einfache und kostengünstige Realisierung der Drehbarkeit der Auflageelemente gegeben ist.

Um den Kippwinkel klein halten zu können, sieht ein weiteres bevorzugtes Ausführungsbeispiel der Erfindung vor, dass das Aufnahmeelement wenigstens einen mit dem Halteelement im wesentlichen biegesteif verbundenen Stab aufweist, dessen dem Halteelement abgewandter Endabschnitt zusammen mit einem korrespondierenden Abschnitt des Basiselementes das Drehlager bildet.

Durch den Stab, der gemäß einem weiteren Ausführungsbeispiel mit dem Halteelement im Wesentlichen rechtwinklig verbunden ist, wird also ein Abstand zwischen dem Halteelement und dem Basiselement geschaffen, sodass das Halteelement - ausgehend von einer zum Basiselement im Wesentlichen parallelen Lage - auch auf seinem der Antriebsvorrichtung zugewandten Endabschnitt in Richtung des Basiselements abgesenkt werden kann.

Dadurch wird zum einen erreicht, dass der Neigungswinkel kleiner gehalten werden kann, wodurch die Stabilität des gelagerten Körpers enorm erhöht und zum anderen kann das Haltelement ausgehend von einer zum Basiselement parallelen Lage in Richtung des Basiselementes geneigt beziehungsweise abgesenkt werden.

Wenn gemäß einem weiteren Ausführungsbeispiel der Erfindung die Länge des Stabes zwischen 45 und 85 Prozent, vorzugsweise zwischen 55 und 70 Prozent, des Radius des insbesondere scheibenförmigen Körpers beträgt, ist eine verbesserte Zugänglichkeit zum gehobenen Körper von unten gegeben.

Gemäß einem Ausführungsbeispiel der Erfindung ist vorgesehen, dass die Antriebsvorrichtung von einem Spindelantrieb gebildet ist, während ein anderes Ausführungsbeispiel der Erfindung vorsieht, dass die Antriebsvorrichtung von einem hydraulischen Hubantrieb gebildet ist.

Es sei an dieser Stelle angemerkt, dass unterschiedlichste Arten von Antriebsvorrichtungen geeignet sind, die Erfindungsidee umzusetzen, die beiden vorgenannten Antriebsvorrichtungen haben sich bei Versuchen der Anmelderin jedoch als besonders praktikabel herausgestellt.

Um einen Transport eines mit der erfindungsgemäßen Hebevorrichtung zu hebenden Körpers von einem Ort zu einem anderen gewährleisten zu können, ist gemäß einem bevorzugten Ausführungsbeispiel der Erfindung vorgesehen, dass die Hebevorrichtung als spurgebundenes Fördermittel mit einem Fahrgestell, einem Fahrwerk und einer spurgebenden Führungsvorrichtung ausgebildet ist.

Eine technisch einfache Lösung wird dabei erreicht, wenn das Basiselement das Fahrgestell ausbildet und das Fahrwerk wenigstens zwei parallele Achsen mit Laufkörpern aufweist. Wenn dabei die spurgebundene Führungsvorrichtung eine vorzugsweise ortsungebundene Laufschiene umfasst, ist ein einfacher und sicherer Transport der Hebevorrichtung entlang der Laufschienen gewährleistet. In diesem Fall hat es sich weiters als vorteilhaft herausgestellt, wenn die Laufkörper nicht lenkbar sind.

Wie ein weiteres Ausführungsbeispiel der Erfindung vorsieht, weist die Führungsvorrichtung Befestigungsmittel zum Positionieren der Hebevorrichtung an einer Maschine und/oder vorzugsweise höhenverstellbare Stützelemente zum temporären Positionieren der Hebevorrichtung am Flur auf.

Durch die Befestigungsmittel und das Stützelement wird erreicht, dass die spurgebundene Führungsvorrichtung vom Boden beabstandet - beispielsweise an einer Maschine - positioniert werden kann. Es ergibt sich also eine de Facto flurunabhängige, im Betrieb aber dennoch wie eine flurgebunden funktionierende Führungsvorrichtung.

Ein besonders bevorzugtes Ausführungsbeispiel der erfindungsgemäßen Hebevorrichtung sieht weiters vor, dass das Aufnahmeelement dazu ausgebildet ist, den insbesondere scheibenförmigen Körper temporär zu lagern, und das Basiselement so ausgebildet ist, dass das Aufnahmeelement samt dem daran gelagerten Körper zum Herausbewegen aus einem und Hineinbewegen in einen Maschinenbereich zumindest linear verfahrbar ist, wobei eine einfache Positionierung des gelagerten Körpers in unterschiedlichen Stellungen dann erreicht werden kann, wenn das Aufnahmeelement zur drehbaren Lagerung des scheibenförmigen Körpers ausgebildet ist.

Die erfindungsgemäße Hebevorrichtung gewährleistet eine sichere und einfache Handhabung bei geringem Arbeitsaufwand. Der Körper, beispielsweise ein scheibenförmiger Schwingungsdämpfer eines Gasmotors, kann angehoben und/oder abgesenkt, um 360° frei gedreht sowie axial verschoben werden. Aufgrund des schlanken Designs der Hebevorrichtung ist es möglich, diese auch auf engstem Raum einzusetzen. So kann beispielsweise ein Schwingungsdämpfer eines Gasmotors getauscht werden, ohne dass andere Maschinenbauteile entfernt werden müssen. Aufwändige und sicherheitstechnisch bedenkliche Lösungen, wie zum Beispiel das Aufspannen eines Schienensystems, auf dem ein Hebebock zum Senken des Schwingungsdämpfers fahrbar angeordnet wird, auf einen Maschinenrahmen können mit der Erfindung vermieden werden.

Weitere Einzelheiten und Vorteile der vorliegenden Erfindung werden anhand der Figurenbeschreibung unter Bezugnahme auf die in der Zeichnung dargestellten Ausführungsbeispiele im Folgenden näher erläutert.

Dabei zeigt
- Fig. 1: ein bevorzugtes Ausführungsbeispiel der Erfindung, bei dem die Hebevorrichtung als spurgebundenes Fördermittel mit einer spurgebenden Führungsvorrichtung ausgebildet ist,
- Fig. 2a: das Ausführungsbeispiel aus Fig. 1 mit daran gelagertem Körper,
- Fig. 2b: die Anordnung der erfindungsgemäßen Hebevorrichtung an einer Maschine,
- Fig. 3a, 3b: eine Frontansicht und eine Perspektive eines an einer erfindungsgemäßen Hebevorrichtung gelagerten Körpers in abgesenkter Stellung der Hebevorrichtung,
- Fig. 4a, 4b: das Beispiel aus Fig. 3a und 3b in einer Hebestellung der Hebevorrichtung und
- Fig. 5a-5c: unterschiedliche Stellungen der Hebevorrichtung mit daran gelagertem Körper bei der Demontage des Körpers aus einer Maschine.

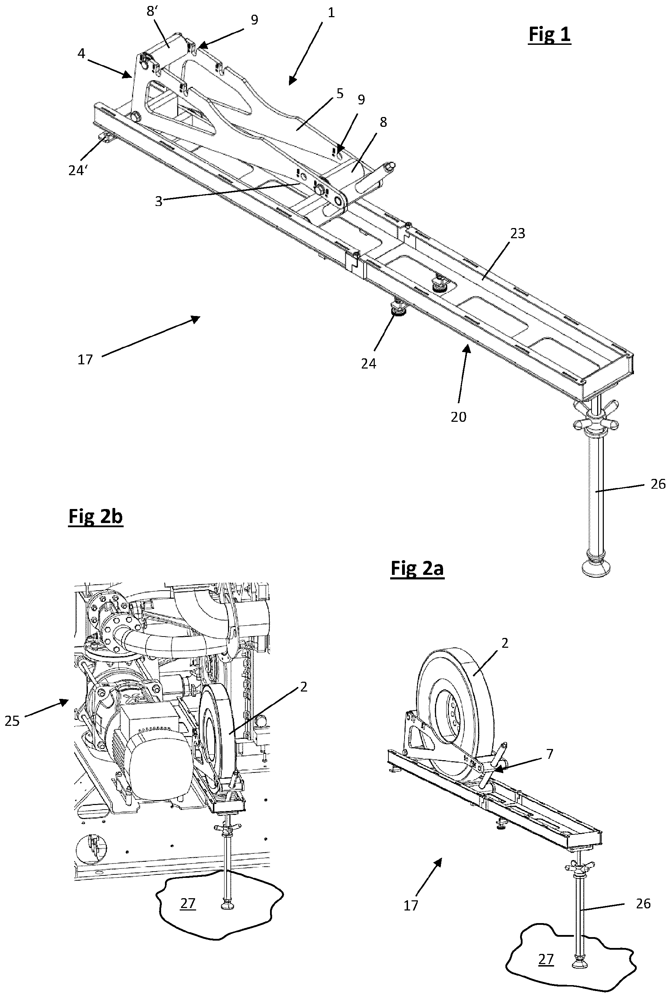

Die in Fig. 1 gezeigte Hebevorrichtung 1 ist als spurgebundenes Fördermittel 17 ausgebildet. Dabei ist das Basiselement 3 der Hebevorrichtung 1 in einer Laufschiene 23 der spurgebundenen Führungsvorrichtung 20 verfahrbar angeordnet.

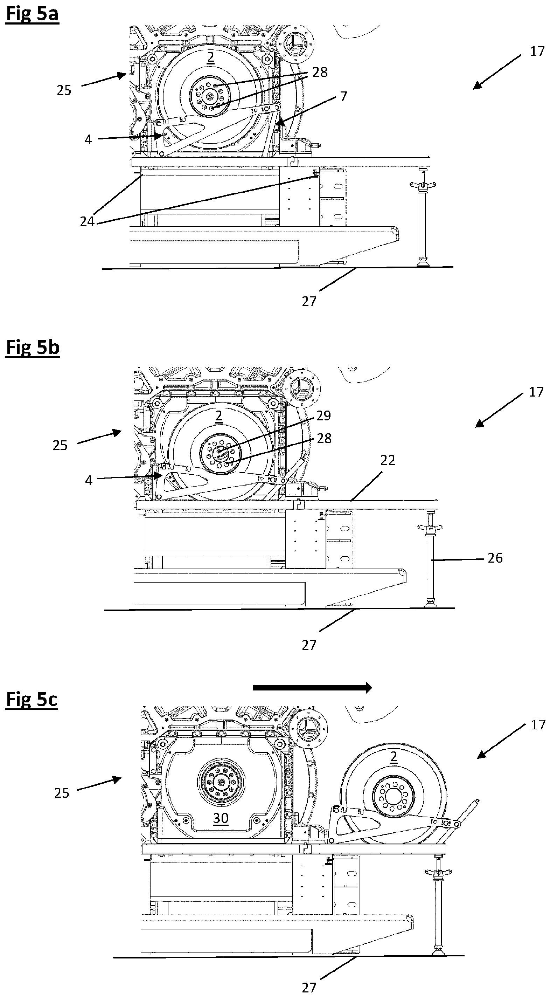

Die Führungsvorrichtung 20 weist Befestigungsmittel 24, 24` zum temporären Fixieren der Führungsvorrichtung 20 an einer Maschine 25 (Fig. 5a-5c) und ein höhenverstellbares Stützelement 26, mittels dem die Führungsvorrichtung 20 am Flur abgestützt wird, auf.

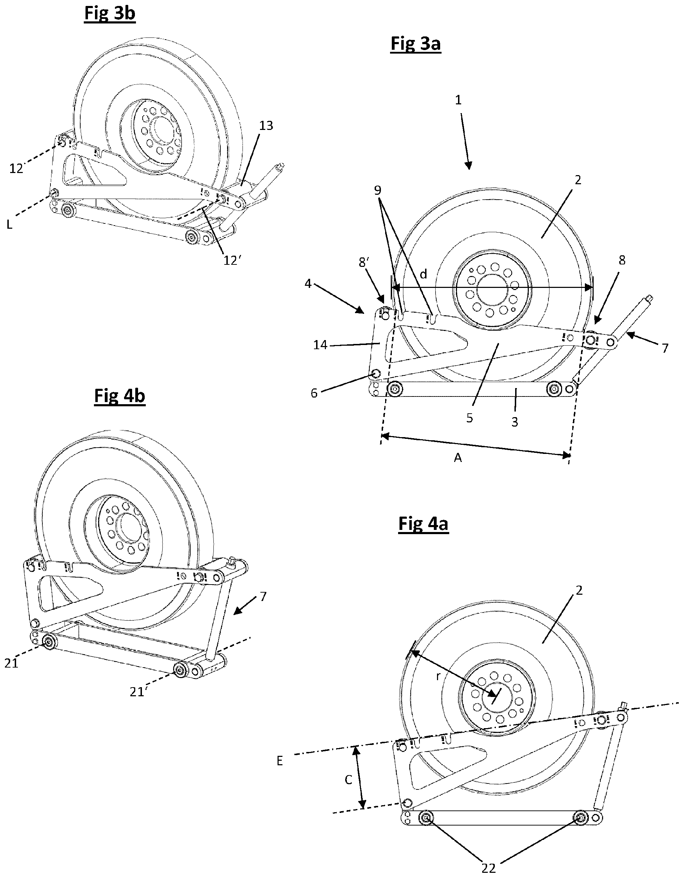

Das Aufnahmeelement 4 ist mit dem Basiselement 3 in einem Endbereich über ein Drehlager 6 (Fig. 3a) und auf seiner gegenüberliegenden Seite über eine lineare Antriebsvorrichtung 7 verbunden. Das Aufnahmeelement 4 umfasst ein rahmenförmiges Halteelement 5, welches in zwei gegenüberliegenden Endabschnitten zwei drehbeweglich gelagerte Auflageelemente 8, 8' für den zu hebenden Körper 2 aufweist.

Die Fig. 2a zeigt die auf dem Flur 27 abgestützte Hebevorrichtung aus Fig. 1. Auf der als spurgebundenes Fördermittel 17 ausgebildeten Hebevorrichtung 1 ist ein Körper 2, im gezeigten Ausführungsbeispiel ein scheibenförmiger Schwingungsdämpfer, gelagert. Die Hebevorrichtung 1 befindet sich in abgesenktem Zustand, das heißt, der Körper 2 wurde mittels der linearen Antriebsvorrichtung 7 abgesenkt. In dieser Stellung kann nun der auf dem Halteelement 4 lagernde Körper 2 in der spurgebundenen Führungsvorrichtung 20 axial verfahren werden.

Die Fig. 2b zeigt die Anordnung einer als spurgebundenes Fördermittel 17 ausgebildeten Hebevorrichtung 1 an einer Maschine 25, wobei - ausgehend von der in Fig. 2a gezeigten Stellung - der Körper 2 aus der Maschine 25 herausbewegt worden ist, sodass der Körper 2 nunmehr frei zugänglich ist und beispielsweise mittels eines Hebekranes abtransportiert werden kann. Es ist ersichtlich, dass die Hebevorrichtung 1 sehr schmal baut, einerseits um überhaupt in die Maschine 25 unter den Körper 2, beispielsweis einen Schwingungsdämpfer, gelangen zu können und andererseits kann man dadurch selbst wenn mehreren Körper 2 nebeneinander in der Maschine 25 angeordnet sind, die Körper 2 einzeln aus der Maschine 25 entfernen bzw. entnehmen.

Bei dem in den Fig. 3a und 3b gezeigten Ausführungsbeispiel der erfindungsgemäßen Hebevorrichtung 1 ist das Halteelement 4 mit dem Basiselement 3 in einem Endbereich über ein Drehlager 6 radial bewegbar verbunden. Auf dem gegenüberliegenden Ende ist das Aufnahmeelement 4 mit dem Basiselement 3 über einen Linearantrieb 7 verbunden. Dieser Linearantrieb 7 kann beispielsweise als Spindelantrieb oder hydraulischer Hubantrieb ausgebildet sein.

Der Körper 2 ist auf dem Halteelement 5 des Aufnahmeelementes 4 gelagert. Dabei liegt der Körper 2 auf den drehbaren Auflageelementen 8, 8' auf. Ein wesentliches Merkmal ist dabei, dass im Halteelement 5 mehrere Aufnahmeöffnungen 9 für die Auflageelemente 8, 8' ausgebildet sind. Somit können einerseits mit der erfindungsgemäßen Hebevorrichtung 1 Körper 2 unterschiedlicher Größe aufgenommen werden und andererseits kann die Lageposition, insbesondere die Höhe, der Körper 2 über die Positionierung im Haltelement 5 beeinflusst werden.

Das Halteelement 5 weist eine muldenförmige Ausnehmung auf, wodurch die Zugänglichkeit zu den Durchtrittsöffnungen 28 des Körpers 2, die zur Aufnahme von Verbindungselementen (nicht dargestellt), mittels denen der Körper 2 an der Maschine 25 befestigt wird, sichergestellt ist.

Die Fig. 4a und 4b zeigen die Hebevorrichtung 1 aus Fig. 3a und 3b in Hebestellung. Über die Antriebsvorrichtung 7 wurde das rahmenförmige Halteelement 5 gegenüber dem Basiselement 3 nach oben bewegt, sodass der Körper 2 nunmehr nur mehr auf den drehbar gelagerten Auflageelementen 8, 8' aufliegt und in dieser Stellung der Hebevorrichtung 1 um 360° frei drehbar gelagert ist. Dadurch, dass die Längserstreckung A der lichten Öffnung zwischen den Auflageelementen 8, 8' etwas geringer ist als der Durchmesser d des scheibenförmigen Körpers 2, wird sichergestellt, dass der Körper 2 stabil gelagert ist.

Die Länge c des Stabes 14, der den Abstand zwischen der Lagerachse L des Drehlagers 6 und der Lagerebene E des Halteelementes 5 definiert, beträgt ca. 2/3 des Radius r des Körpers 2. Dadurch wird erreicht, dass der Kippwinkel zwischen der gehobenen und der abgesenkten Stellung des Körpers 2klein gehalten werden kann, was sich wiederum positiv auf die Stabilität des gelagerten Körpers 2 auswirkt.

Der so gehobene Körper 2 kann nun um 360° frei gedreht werden, was wichtig ist, um die Durchtrittsöffnungen 28 im Körper 2 mit korrespondierenden Aufnahmeöffnungen 29 (Fig. 5c) an der Maschine 25 in Deckung zu bringen, sodass der Körper 2 mittels Verbindungselementen (nicht dargestellt), beispielsweise Schrauben, die durch die Durchtrittsöffnungen 28 in die Aufnahmeöffnungen 29 an der Maschine 25 eingebracht werden, befestigt werden kann.

Beim gezeigten Ausführungsbeispiel bildet das Basiselement 3 das Fahrgestell 18 des spurgebundenen Fördermittels 17 aus, wobei das Fahrwerk 19 zwei parallele Achsen 21, 21` mit Laufkörpern 22 umfasst.

Die Figuren 5a-5c zeigen unterschiedliche Stellungen der erfindungsgemäßen Hebevorrichtung 1 mit daran gelagertem Körper 2 während der Demontage des Körpers 2 von einer Maschine 5.

In Fig. 5a ist der scheibenförmige Körper 2, der von einem Schwingungsdämpfer gebildet ist, an der Maschine 25, insbesondere an der Kurbelwelle der Maschine 25, befestigt. Das Halteelement 5 der als spurgebundenes Fördermittel 17 ausgebildeten Hebevorrichtung 1 ist über die Antriebsvorrichtung 7 derart zur Anlage am Körper 2 gebracht worden, dass der Körper 2 auf den drehbar gelagerten Aufnahmeelementen 8,8` aufliegt. In dieser Stellung werden nun die Verbindungselemente, mit denen der Körper 2 an der Maschine 25 angeordnet ist, entfernt.

Der nunmehr von der Maschine 25 entkoppelte und auf dem Halteelement 5 lagernde Körper 2 wird in weiterer Folge mittels der Antriebsvorrichtung 7 abgesenkt. Aus Fig. 5b ist ersichtlich, dass in dieser Stellung die Durchtrittsöffnungen 28 im Körper 2 mit den Aufnahmeöffnungen 29 an der Maschine 25 nicht mehr deckungsgleich sind.

Mittels des Fahrwerks 19 (Laufkörper 22 aus Fig. 4a) wird nun die Hebevorrichtung 1 in Pfeilrichtung in der Laufschien 23 der Führungsvorrichtung 20 aus der Maschine 25 bewegt. Die Führungsvorrichtung 20 liegt im Bereich der Maschine 25 auf dieser auf und ist außerhalb des Maschinenbereiches über ein Stützelement 26 am Flur 27 abgestützt.

In der in Fig. 5c gezeigten Position ist der Körper 2 frei zugänglich und kann beispielsweise mittels eines Kranes abtransportiert werden, was aufgrund der Unzugänglichkeit zur Montageposition des Körpers 2 in der Maschine 25 nicht möglich ist.

Die Montage eines ausgewechselten Körpers 2 erfolgt in umgekehrter Reihenfolge, wobei insbesondere noch einmal auf die 360° drehbewegliche Lagerung des Körpers 2 auf den drehbar gelagerten Aufnahmeelementen 8, 8' des Halteelementes 5 hingewiesen sei, weil erst durch diese Drehbarkeit gewährleistet ist, dass der Körper 2, wenn er sich in Hebestellung gemäß Fig. 5a befindet, in einfacher Weise rotiert werden kann, bis die Durchtrittsöffnungen 28 im Körper 2 mit den Aufnahmeöffnungen 29 an der Maschine 25, bei Schwingungsdämpfern an der Kurbelwelle der Maschine 25, in Deckung gebracht werden können, sodass die Befestigung des ausgetauschten Körpers 2 an der Maschine 25 in einfacher Weise erfolgen kann.

Wenn auch die Erfindung anhand des gezeigten Ausführungsbeispiels konkret beschrieben wurde, versteht es sich von selbst, dass der Anmeldungsgegenstand nicht auf dieses Ausführungsbeispiel beschränkt ist. Vielmehr sind Maßnahmen und Abwandlungen, die dazu dienen, den Erfindungsgedanken umzusetzen, durchaus denkbar und erwünscht. So könnte beispielsweise die Antriebsvorrichtung auch von einem hydraulischen Hubantrieb oder einer Zahnstange anstelle eines Spindelantriebes gebildet sein. Auch hinsichtlich der Ausbildung des spurgebundenen Fördermittels, insbesondere der Führungsvorrichtung, ist die Erfindung in keiner Weise beschränkt, solange die Hebevorrichtung mit dem daran gelagerten Körper in einfacher Weise aus dem Maschinenbereich bewegt werden kann und damit sichergestellt ist, dass der Körper in weiterer Folge frei zugänglich ist.

### Bezugszeichenliste:

- 1: Hebevorrichtung
- 2: Scheibenförmiger Körper
- 3: Basiselement
- 4: Aufnahmeelement
- 5: Halteelement
- 6: Drehlager
- 7: Antriebsvorrichtung
- 8: Auflageelement
- 9: Aufnahmeöffnungen
- 14: Stab
- 17: spurgebundenes Fördermittel
- 18: Fahrgestell
- 19: Fahrwerk
- 20: Führungsvorrichtung
- 21: Achsen
- 22: Laufkörper
- 23: Laufschiene
- 24: Befestigungsmittel
- 25: Maschine
- 26: Stützelement
- 27: Flur
- 28: Durchtrittsöffnungen
- 29: Aufnahmeöffnungen
- E: Lagerebene von 5
- L: Lagerachse von 6
- A: Längserstreckung der lichten Öffnung von 5
- c: Länge von 14
- d: Durchmesser von 2
- r: Radius von 2

## Patentansprüche

1. Hebevorrichtung (1) für insbesondere scheibenförmige Körper (2), insbesondere Schwingungsdämpfer, mit einem Basiselement (3) und einem Aufnahmeelement (4), wobei das Aufnahmeelement (4) ein rahmenförmiges Halteelement (5) zur temporären Lagerung des insbesondere scheibenförmigen Körpers (2) umfasst und das Aufnahmeelement (4) mit dem Basiselement (3) über ein Drehlager (6) und eine zwischen dem Basiselement (3) und dem Aufnahmeelement (4) wirkbar angeordnete Antriebsvorrichtung (7), insbesondere Linearantrieb, verbunden ist, **dadurch gekennzeichnet, dass** das Halteelement (5) wenigstens ein drehbeweglich gelagertes Auflageelement (8,8`) für den insbesondere scheibenförmigen Körper (2) aufweist.

2. Hebevorrichtung nach Anspruch 1, **dadurch gekennzeichnet, dass** - in einem Längsschnitt betrachtet - die Lagerebene (E) des Halteelementes (5) von der Lagerachse (L) des Drehlagers (6) vertikal beabstandet ist.

3. Hebevorrichtung nach Anspruch 1 oder 2, **dadurch gekennzeichnet, dass** das Halteelement (5) eine Durchtrittsöffnung zur Aufnahme des scheibenförmigen Körpers (2) aufweist, wobei in zwei gegenüberliegenden Endabschnitten der Durchtrittsöffnung jeweils wenigstens ein drehbar gelagertes Auflageelement (8,8`) derart angeordnet ist, dass die Durchtrittsöffnung von den gegenüberliegenden Auflageelementen (8,8`) begrenzt ist.

4. Hebevorrichtung nach einem der Ansprüche 1 bis 3, **dadurch gekennzeichnet, dass** die Längserstreckung (A) der zwischen den gegenüberliegenden Auflageelementen (8,8`) verbleibenden lichten Öffnung der Durchtrittsöffnung zwischen 65 und 98 Prozent, vorzugsweise zwischen 85 und 96 Prozent, des Durchmessers (d) des scheibenförmigen Körpers (2) beträgt.

5. Hebevorrichtung nach einem der Ansprüche 1 bis 4, **dadurch gekennzeichnet, dass** wenigstens zwei gegenüberliegende Auflageelemente (8,8`) von Laufkörpern mit im Wesentlichen parallelen Achsen gebildet sind.

6. Hebevorrichtung nach einem der Ansprüche 1 bis 5, **dadurch gekennzeichnet, dass** das Aufnahmeelement (4) wenigstens einen mit dem Halteelement (5) im wesentlichen biegesteif verbundenen Stab (14) aufweist, dessen dem Halteelement (5) abgewandter Endabschnitt zusammen mit einem korrespondierenden Abschnitt des Basiselementes (3) das Drehlager (6) bildet.

7. Hebevorrichtung nach Anspruch 6, **dadurch gekennzeichnet, dass** der Stab (14) mit dem Halteelement (5) im Wesentlichen rechtwinkelig verbunden ist.

8. Hebevorrichtung nach Anspruch 6 oder 7, **dadurch gekennzeichnet, dass** die Länge (c) des Stabes (14) zwischen 45 und 85 Prozent, vorzugsweise zwischen 55 und 70 Prozent, des Radius (r) des scheibenförmigen Körpers (2) beträgt.

9. Hebevorrichtung nach einem der Ansprüche 1 bis 8, **dadurch gekennzeichnet, dass** die Antriebsvorrichtung (7) von einem Spindelantrieb gebildet ist.

10. Hebevorrichtung nach einem der Ansprüche 1 bis 8, **dadurch gekennzeichnet, dass** die Antriebsvorrichtung (7) von einem hydraulischen Hubantrieb gebildet ist.

11. Hebevorrichtung nach einem der Ansprüche 1 bis 10, **dadurch gekennzeichnet, dass** die Hebevorrichtung (1) als spurgebundenes Fördermittel (17) mit einem Fahrgestell (18), einem Fahrwerk (19) und einer spurgebenden Führungsvorrichtung (20) ausgebildet ist.

12. Hebevorrichtung nach Anspruch 11, **dadurch gekennzeichnet, dass** das Basiselement (3) das Fahrgestell (18) ausbildet und das Fahrwerk (19) wenigstens zwei parallele Achsen (21,21') mit Laufkörpern (22) aufweist.

13. Hebevorrichtung nach Anspruch 11 oder 12, **dadurch gekennzeichnet, dass** die spurgebundene Führungsvorrichtung (20) eine vorzugsweise ortsungebundene Laufschiene (23) umfasst.

14. Hebevorrichtung nach einem der Ansprüche 11 bis 13, **dadurch gekennzeichnet, dass** die Führungsvorrichtung (20) Befestigungsmittel (24, 24') zum Positionieren der Hebevorrichtung (1) an einer Maschine (25) und/oder wenigstens ein vorzugsweise höhenverstellbares Stützelement (26) zum temporären Positionieren der Hebevorrichtung (1) am Flur (27) aufweist.

15. Hebevorrichtung nach einem der Ansprüche 1 bis 14, **dadurch gekennzeichnet, dass** das Aufnahmeelement (4) dazu ausgebildet ist, den vorzugsweise scheibenförmigen Körper (2) temporär zu lagern und das Basiselement (3) derart ausgebildet ist, dass das Aufnahmeelement (4) samt dem daran gelagerten scheibenförmigen Körper (2) zum Herausbewegen aus einem und Hineinbewegen in einen Maschinenbereich zumindest linear verfahrbar ist.

16. Hebevorrichtung nach Anspruch 14, **dadurch gekennzeichnet, dass** das Aufnahmeelement (4) zur drehbaren Lagerung des scheibenförmigen Körpers (2) ausgebildet ist.
